# EUROPEAN PATENT APPLICATION

(11) **EP 1 845 628 A1**
(43) Date of publication of application: **17.10.2007**
(21) Application number: 06711809.1
(22) Date of filing: 17.01.2006
(51) Int. Cl.: H04B 1/707, H04B 1/10

(54) **MOBILE COMMUNICATION TERMINAL, AND MULTIPATH INTERFERENCE ELIMINATING METHOD**

(30) Priority: 18.01.2005 JP 2005010848
(71) Applicant: NTT DoCoMo Inc., Chiyoda-Ku Tokyo 100-6150 (JP)
(72) Inventor: IIZUKA, Yousuke IP Dept., NTT DoCoMo, Inc., Chiyoda-ku, Tokyo, 1006150 (JP); NAKAMORI, Takeshi IP Dept., NTT DoCoMo, Inc., Chiyoda-ku, Tokyo, 1006150 (JP); OGAWA, Shinsuke IP Dept., NTT DoCoMo, Inc., Chiyoda-ku, Tokyo, 100616150 (JP)
(74) Representative: Grosse, Wolfgang
(86) International application number: PCT/JP2006/300529
(87) International publication number: WO 2006/077829

(57) **Abstract**

Properties of a mobile communication terminal can be improved by eliminating interference according to environments of various reception paths. The mobile communication terminal generates a delay profile by a common pilot channel sent from a base station and measures received electric power and delay amount of the reception path. Next, based on the delay profile, the delay amount of a reception path P4 farthest from a reference path P1 is set as a maximum delay amount D. However, the farthest reception path P4 is excluded from the subjects of interference elimination when the electric power of which differs by an amount not less than 10 dB with respect to the electric power of the reference path P1, and the delay amount of a reception path P3 next farthest from the reference path P1 is set as the maximum delay amount D. After that, a channel matrix is generated based on the number of samples and the maximum delay amount D. Then, interference is eliminated by multiplying a channel actually carrying data information by a weighting matrix generated based on the channel matrix.

## Description

### Technical Field

The present invention relates to a mobile communication terminal and a method for eliminating multipath interference.

### Background Art

In recent years, the Internet has been spread quickly and, pluralistic resources and enlarging capacity of information have been progressing. Accompanied with this, also in a field of a mobile communication, researches and developments on a next generation wireless access system for achieving high-speed wireless communication have been energetically performed. The next generation wireless access system includes, for example, HSPDA (High Speed Downlink Packet Access) system, which employs Adaptive Modulation and channel Coding (AMC) where throughput is determined according to a reception environment of a mobile communication terminal (mobile device). In the high speed wireless communication, interference by a delay wave of its own signal causes reduction in throughput and decrease in error rate of a data channel. For this reason, by applying a linear equalizer or an interference canceller for eliminating multipath interference, reception capability of the mobile communication terminal is improved.

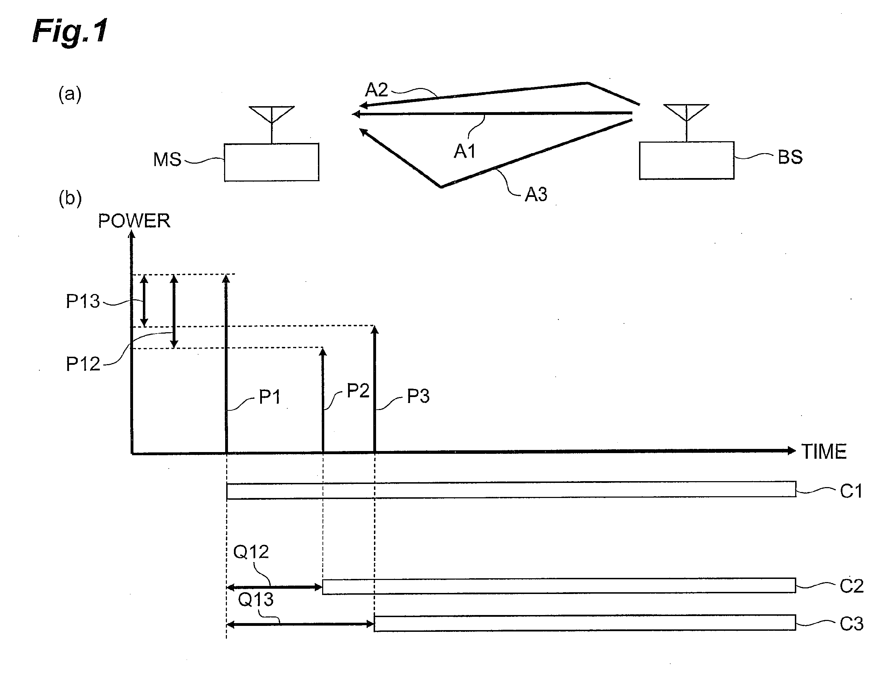

Hereinafter, an operational procedure when interference is eliminated in a mobile communication terminal mounted with a conventionally studied interference elimination apparatus (here, in particular, a linear equalizer) will be described with reference to Figs 1 to 3.

First, as illustrated in Fig. 1, a mobile communication terminal MS measures reception paths from Common Pilot Channels (CPICH) C1 to C3 transmitted from a base station BS, and generates delay profiles based on the reception paths. Then, based on the delay profiles, received electric powers P1 to P3 through the reception paths A1 to A3, and delay amounts (the same meaning as receiving timing and delay time) Q12 and Q13 are measured. In these measurements, for example, a known measuring method adopted in a usual CDMA-compliant mobile communication terminal can be used. The delay amount Q12 is a time lag between the time when the reception path A1 is received and the time when the reception path A2 (delay wave) is received, and the delay amount Q13 is a time lag between the time when the reception path A1 is received and the time when the reception path A3 (delay wave) is received. Incidentally, the horizontal axis of the delay profiles shown in Fig. 1(b) represents time, and the vertical axis thereof represents received electric power. Also, P12 shown in Fig. 1(b) indicates an electric power difference between the received electric power P1 through the reception path A1 and the received electric power P2 through the reception path A2, and P13 indicates an electric power difference between the received electric power P1 through the reception path A1 and the received electric power P3 through the reception path A3.

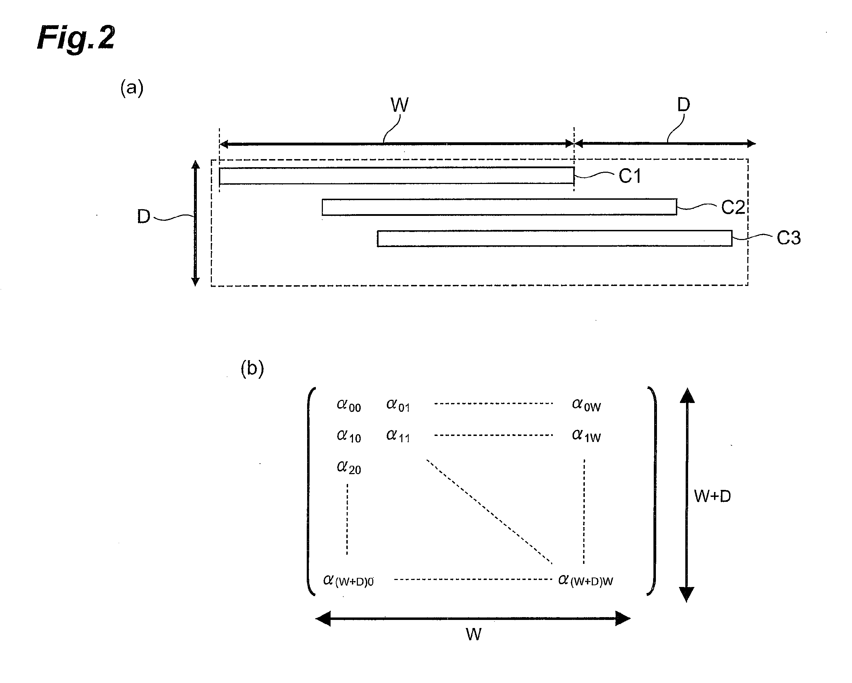

Next, according to the number of samples W (that can be set arbitrarily) and the maximum delay amount D of the interference elimination apparatus, which are contained in a delay profile illustrated in Fig 2(a) and determined in advance, a channel matrix shown in Fig 2(b) is generated. Fig 2(a) is a view illustrating only the lower portion of the delay profile shown in Fig 1(b).

Next, a weighting matrix is generated based on the generated channel matrix, and interference is eliminated by multiplying a channel actually carrying data information by the weighting matrix.

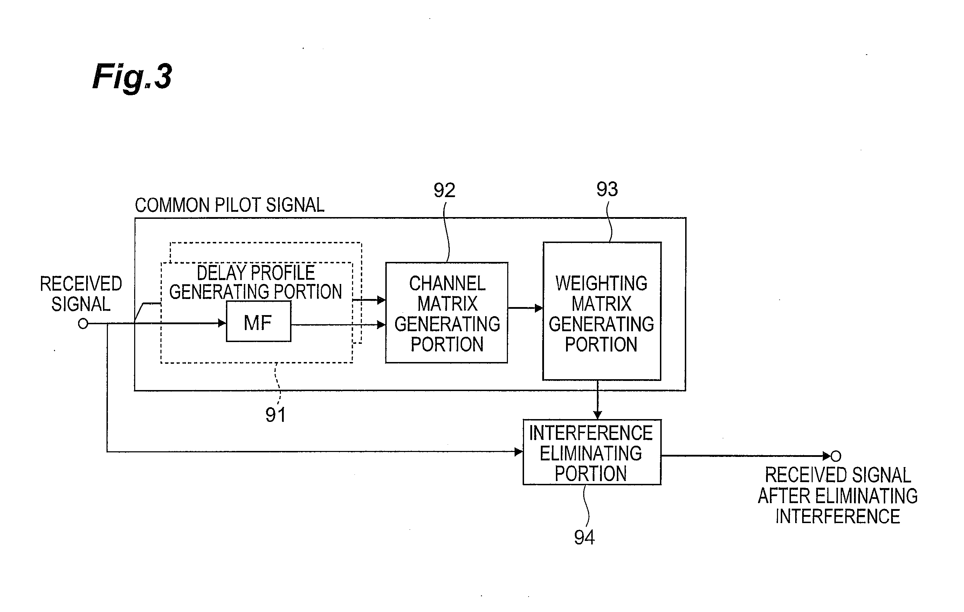

The above-mentioned conventional operational procedure when interference is eliminated will be described specifically with reference to Fig. 3.

First, a delay profile generating portion 91 despreads a signal transmitted from the base station by using the common pilot channel, and generates a delay profile, for example, shown in Fig. 1(b). The delay profile generating portion 91, based on the delay profile shown in Fig. 1(b), measures the received electric powers P1 to P3 through respective reception paths A1 to A3 and the delay amounts Q12 and Q13. Incidentally, the delay profile generating portion 91 has a function of MF (Matched Filter).

Next, a channel matrix generating portion 92 generates a channel matrix shown in Fig. 2(b) based on the number of samples W and the maximum delay amount D shown in Fig. 2(a). The channel matrix is represented as a matrix of (W + D) rows and W columns. Next, a weighting matrix generating portion 93 generates a weighting matrix by calculating the inverse matrix of the channel matrix shown in Fig. 2(b). Next, an interference eliminating portion 94 eliminates multipath interference by multiplying the data on a channel by the weighting matrix.

In the above-mentioned conventional operational procedure, since calculation of the inverse matrix is required when the weighting matrix is generated, the number of calculation times when the weighting matrix is generated will largely depend on the size of the channel matrix (the numbers of rows and columns (W and (W + D) in Fig. 2(b)). In general, when an inverse matrix of X rows and Y columns is generated, the number of multiplication times is required to be more than X³ times.

In the below non-patent document 1, a technology relating to the above-mentioned conventional interference elimination method is disclosed.
Non-Patent Document 1: A. Klein, "Data Detection Algorithms Specially Designed for the Downlink of Mobile Radio Systems," Proc. of IEEE VTC'97, pp. 203-207, Phoenix, May 1997. T. Kawamura, K. Higuchi, Y. Kishiyama, and M. Sawahashi, "Comparison between multipath interference canceller and chip equalizer in HSDPA in multipath channel," Proc. of IEEE VTC 2002, pp. 459-463, Birmingham, May 2002.

### Disclosure of the Invention

### Problem to be Solved by the Invention

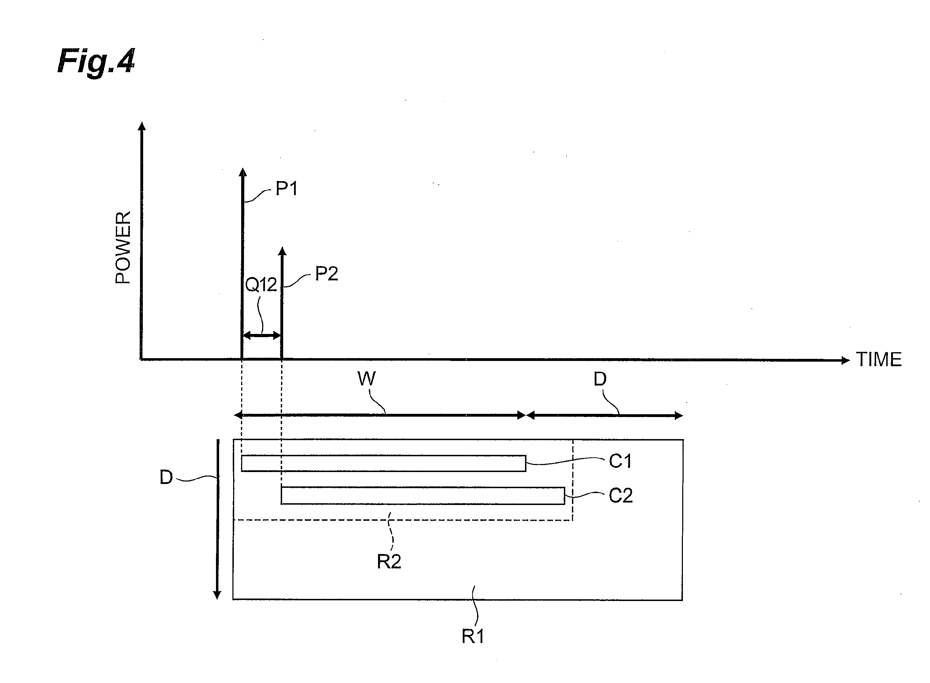

As mentioned above, an interference elimination apparatus eliminates interference due to a delay wave of its own signal to allow higher-speed wireless communication. However, the conventionally studied interference elimination apparatus eliminates interference by using predetermined parameters. Accordingly, although interference is eliminated by increasing electric power consumption, in some cases, it cannot correspond to environmental changes in various reception paths, thus resulting in no contribution to improvement of properties. The cases of no contribution to improvement of properties will be specifically described with reference to Figs. 4 to 6.

As illustrated in Fig. 4, for example, even if the maximum delay amount D is set to be not less than the delay time of a reception path when the delay amount Q12 between the reception paths is small, the effect by the interference elimination does not change. However, if the maximum delay amount D is set to be unnecessarily large, the number of calculation times will increase. In other words, even a range which does not influence the effect by the interference elimination will be contained in the subject of the calculation, and the number of calculation times will increase drastically. Accordingly, the electric power consumption also increases. Here, a range R1 shown in Fig. 4 represents a range where a channel matrix is generated, and a range R2 represents a range where the effect by the interference elimination exists.

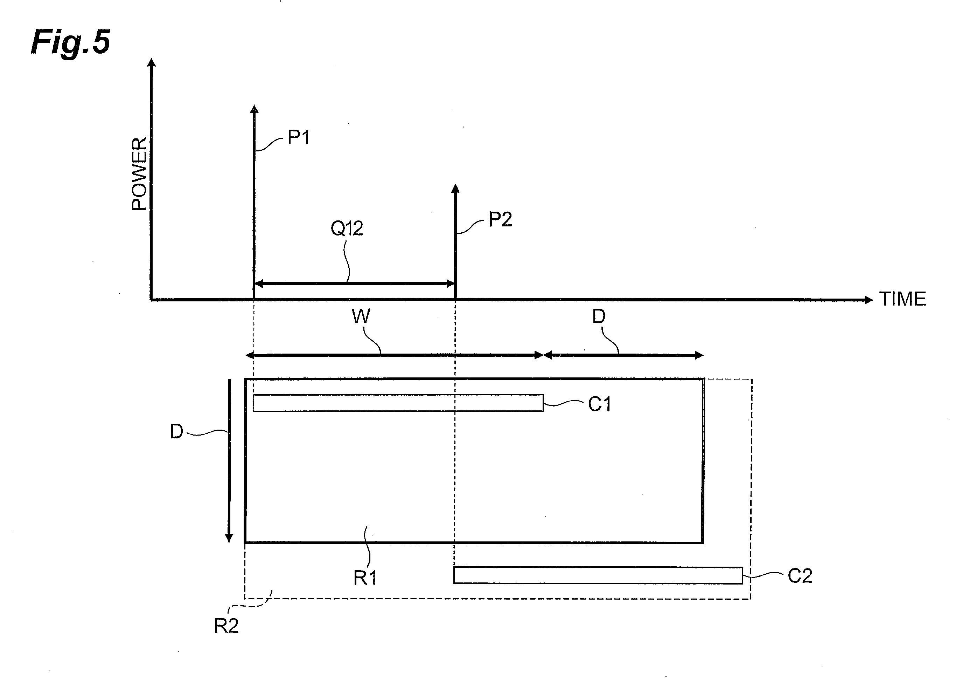

On the other hand, as illustrated in Fig. 5, for example, when the delay amount Q12 between the reception paths is larger than the maximum delay amount D, the interference cannot be eliminated even if the channel matrix is generated. Accordingly, in such a case, despite the increases of the number of calculation times and the electric power consumption, the properties thereof will not improve.

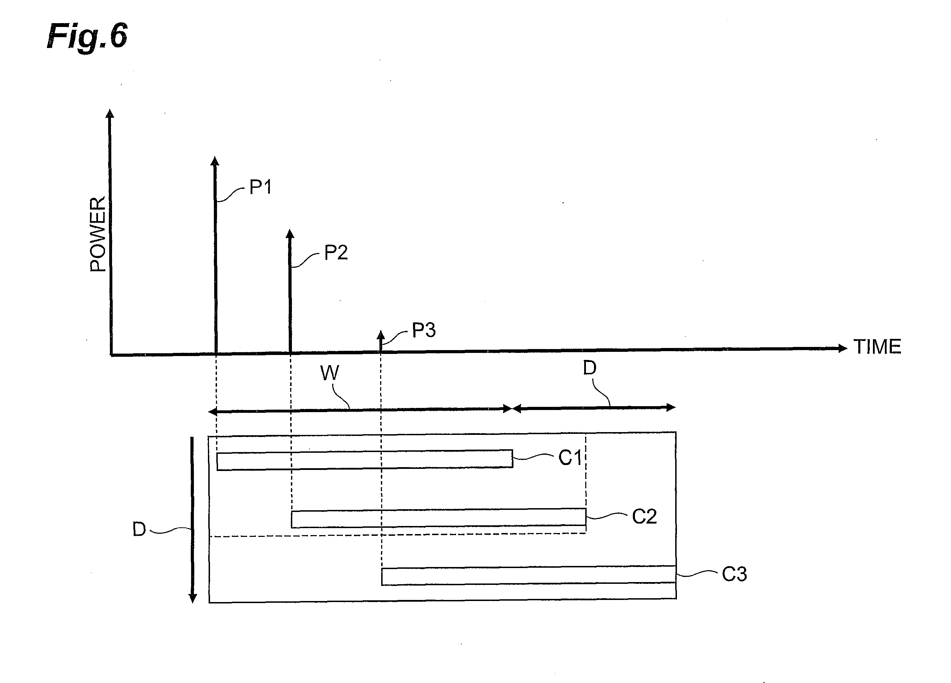

Further, as illustrated in Fig. 6, since, when the electric power of a reception path P3 being a delay wave is small, the influence of the multipath interference is small, even if the interference of the path is eliminated, there is little influence on improvement of the properties. In such a case, if the maximum delay amount D is set to be large, in some cases, despite the increase of the number of calculation times, the effect by the interference elimination cannot be obtained.

### Means for Solving the Problem

Therefore, in order to address the above-mentioned problems, the object of the present invention is to provide a mobile communication terminal and a method for eliminating multipath interference enabling interference elimination according to environments of various reception paths and for improving properties.

The mobile communication terminal according to the present invention includes: a setting means for setting a maximum delay amount according to the delay amount of a reception path farthest from a reception path to be a reference; a generating means for generating a channel matrix based on a predetermined number of samples and the set maximum delay amount; and an interference eliminating means for eliminating interference based on the generated channel matrix.

Moreover, the method for eliminating multipath interference of the present invention is a method for eliminating multipath interference in a mobile communication terminal, in which the maximum delay amount is set according to the delay amount of the farthest reception path from a reception path to be a reference; a channel matrix is generated based on the predetermined number of samples and the set maximum delay amount; and interference is eliminated based on the generated channel matrix.

According to these inventions, interference can be eliminated according to environments of various reception paths, and properties can be improved.

In the mobile communication terminal of the present invention, it is preferable that the farthest reception path has the largest delay amount among paths of which an electric power value is compared with an electric power of the reception path to be the reference and is larger than a predetermined threshold value.

### Effects of the Invention

According to the mobile communication terminal and the method for eliminating multipath interference of the present invention, interference can be eliminated according to environments of various reception paths, and properties can be improved.

### Brief Description of the Drawings

Fig. 1(a) is a schematic view of a state where a mobile communication terminal receives a reception path from a base station, and Fig. 1(b) is a view for illustrating a delay profile.
Fig. 2(a) is a view illustrating a part of the delay profile, and Fig. 2(b) is a view for illustrating a channel matrix.
Fig. 3 is a view exemplifying a functional configuration of a conventional interference elimination apparatus.
Fig. 4 is a view for illustrating a range where the effect of interference elimination exists when the delay amount of the reception path is small.
Fig. 5 is a view for illustrating a range where the effect of interference elimination exists when the delay amount of the reception path is large.
Fig. 6 is a view for illustrating a range where the effect of interference elimination exists when the electric power of the reception path is small.
Fig. 7 is a view exemplifying a functional configuration of an interference elimination apparatus in an embodiment.
Figs. 8(a) and 8(b) are views for illustrating a method for setting maximum delay amount according to the delay amount and received electric power of the reception path.
Fig. 9 is a flowchart illustrating procedures of the interference elimination method in the embodiment.
Fig. 10 is a view for illustrating the control of the maximum delay amount when the delay amount of the reception path is small.
Fig. 11 is a view for illustrating the control of the maximum delay amount when the delay amount of the reception path is large.
Fig. 12 is a view for illustrating the control of the maximum delay amount when the electric power of the reception path is small.

### Description of the Reference Symbols

11 ... Delay profile generating portion; 12 ... Maximum delay amount setting portion; 13 ... Channel matrix generating portion; 14 ... Weighting matrix generating portion; 15 ... Interference eliminating portion

### Best Modes for Carrying Out the Invention

Hereinafter, embodiments of the mobile communication terminal and the method for eliminating multipath interference according to the present invention will be described with reference to drawings. In each figure, the same elements will be denoted by the same reference symbols, and duplicated description will be eliminated.

Since the mobile communication terminal of this embodiment is mounted with high-speed wireless communication function by means of, for example, HSDPA, by employing high-rate error-correcting code or multilevel modulation such as 16QAM (Quadrature Amplitude Modulation) and 64QAM, utilization efficiency of frequency is improved, thus achieving high-speed wireless communication. Incidentally, mobile communication terminals, for example, include a mobile phone, a personal handy phone (PHS), and a personal digital assistance (PDA) having a communication function.

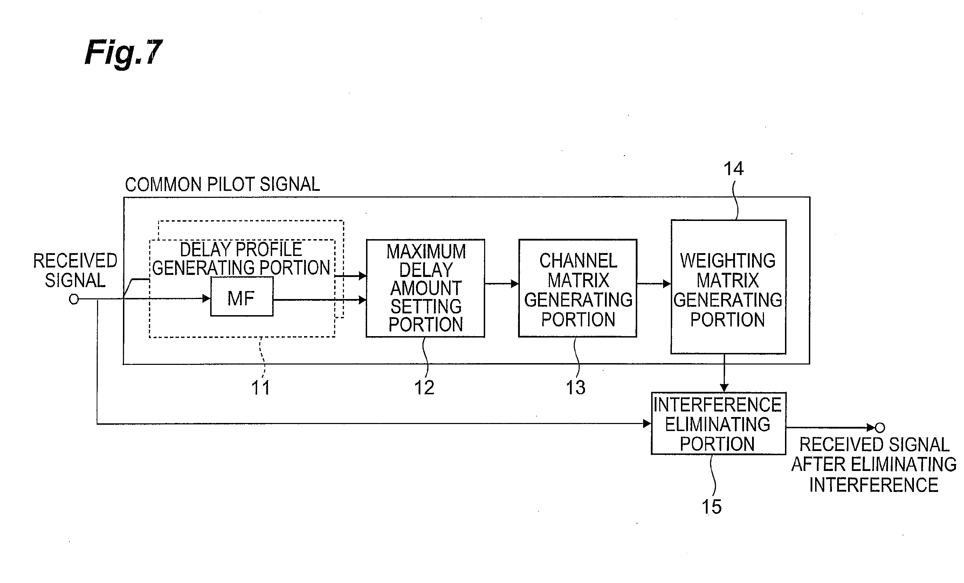

Fig 7 is a view exemplifying a functional configuration of an interference elimination apparatus mounted on the mobile communication terminal in the embodiment. As illustrated in Fig. 7, the interference elimination apparatus mounted on the mobile communication terminal includes: a delay profile generating portion 11; a maximum delay amount setting portion 12 (setting means); a channel matrix generating portion 13 (generating means); a weighting matrix generating portion 14; an interference eliminating portion 15 (interference eliminating means).

The delay profile generating portion 11, in the same manner as that of the delay profile generating portion 91 described in the background art, measures a reception path from a signal transmitted from a base station by using a common pilot channel, and generates a delay profile as shown in Fig. 1(b) based on the reception path. Also, the delay profile generating portion 11 measures the received electric power of each reception path and the delay amount between a reception path to be a reference (hereinafter refereed to as a reference path) and another reception path, based on the generated delay profile. The reference path includes, for example, a path whose received electric power is the maximum or a path whose arrival time from the base station is the fastest. Measurement of the received electric power or the delay amount can be performed by using, for example, a known measuring method used in a usual CDMA-compliant mobile communication terminal. In addition, the delay profile generating portion 11 has a function of MF (matched filter).

The maximum delay amount setting portion 12 sets the maximum delay amount D according to the delay amount through the farthest reception path from the reference path. The delay amount is represented by the time lag between the reference path and a predetermined reception path. Here, the maximum delay amount setting portion 12 compares electric power values between the reference path and the reception path farthest from the reference path, when selecting the reception path farthest from the reference path used when setting the maximum delay amount D. When the electric power of the farthest reception path is determined to be not larger than a predetermined threshold value (for example; 10 dB), the reception path is removed from the subjects to be selected as the reception path used for setting maximum delay amount D. After that, the maximum delay amount setting portion 12 compares the electric power of a reception path which is the second farthest from the reference path and is closer than the removed reception path with the electric power of the reference path. In other words, the maximum delay amount setting portion 12 sets a maximum delay amount D according to the delay amount of a reception path, whose delay amount is the largest among the reception paths having electric power not less than a predetermined threshold value compared with the electric power of the reference path. Since this enables reception paths having small received electric powers to be excluded from subjects of interference elimination, the number of calculation times can be reduced.

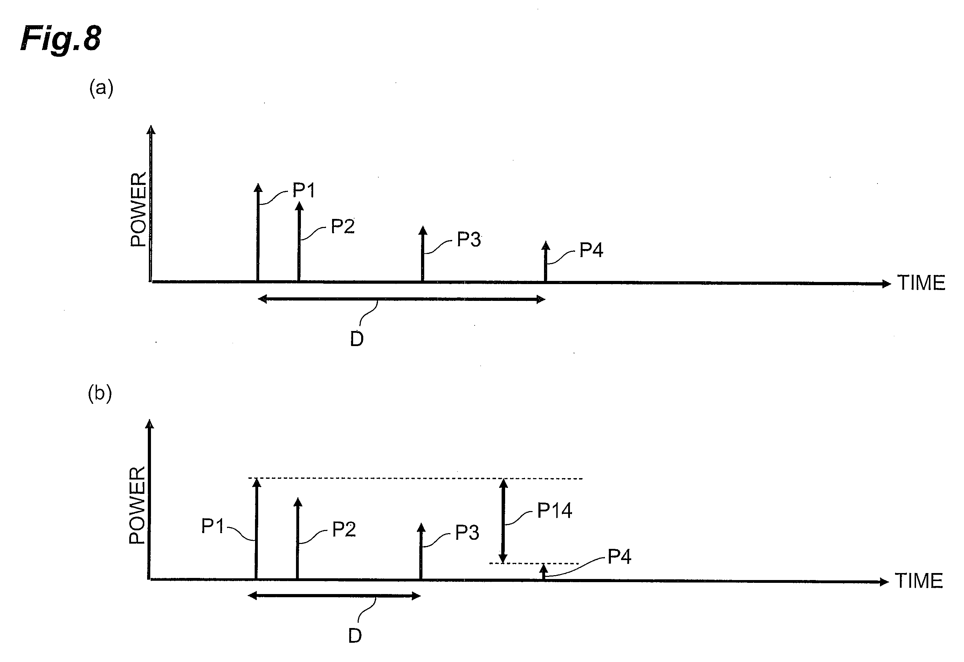

Here, with reference to Fig. 8, a method by which the maximum delay amount is set according to the delay amount of the farthest reception path, will be specifically described. First, Fig. 8(a) is a view illustrating the maximum delay amount when an electric power difference between a reference path P1 having the largest electric power and reception paths P2 to P4 being delay waves is smaller than 10 dB. In Fig. 8(a), as the farthest reception path from the reference path P1, the reception path P4 is selected, and the delay amount of the reception path P4 with respect to the reference path P1 is set as the maximum delay amount D. Next, Fig. 8(b) is a view illustrating the maximum delay amount when the electric power differences between the reference path P1 having the largest electric power and the reception paths P2 to P4 being delay waves are not less than 10 dB. In Fig. 8(b), since an electric power difference P14 between the reference path P1 and the reception path P4 is not less than 10 dB, the reception path P4 is excluded from the subjects to be selected as the farthest reception path from the reference path. In this case, as the reception path farthest from the reference path P1, the reception path P3 is selected, and the delay amount of the reception path P3 with respect to the reference path P1 is set as the maximum delay amount D.

The channel matrix generation portion 13 generates the channel matrix shown in Fig. 2(c), based on the predetermined number of samples W, and the maximum delay amount D set by the maximum delay amount setting portion 12.

The weighting matrix generating portion 14, in the same manner as the weighting matrix generating portion 93 in the background art, generates a weighting matrix, based on the channel matrix generated by the channel matrix generating portion 13.

The interference eliminating portion 15, in the same manner as the interference eliminating portion 94 in the background art, eliminates multipath interference by multiplying the data on a channel by the weighting matrix generated by the weighting matrix generating portion 14.

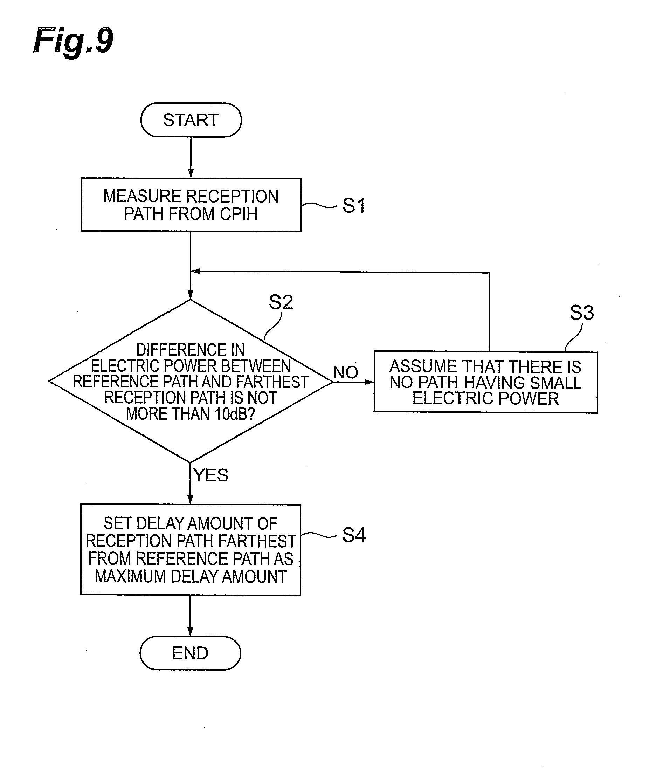

Next, with reference to the flowchart illustrated in Fig. 9, the procedure of the method for eliminating interference in this embodiment, will be described.

First, the delay profile generating portion 11 of the mobile communication terminal measures reception paths based on a common pilot channel transmitted from the base station (step S1), and generates delay profiles to measure the received electric power of each reception path and the delay amount between the reference path and each reception path.

Next, the maximum delay amount setting portion 12 determines whether or not the electric power difference between the reference path and the reception path farthest from the reference path is not more than 10 dB (step S2). When the determination result is NO (No; in step S2), the maximum delay amount setting portion 12 excludes the currently determined reception path from the subjects to be selected as the reception path farthest from the reference path used for setting the maximum delay amount D. Then the procedure moves to step S2.

On the contrary, when the determination result in step S2 is YES (Yes; in step S2), the maximum delay amount setting portion 12 selects the currently determined reception path as the reception path farthest from the reference path, and set the delay amount of the selected reception path from the reference path as the maximum delay amount (step S3). After that, based on the set maximum delay amount and a predetermined number of samples, a channel matrix is generated. Then, interference is eliminated by multiplying a channel actually carrying data information by a weighting matrix generated based on the cannel matrix.

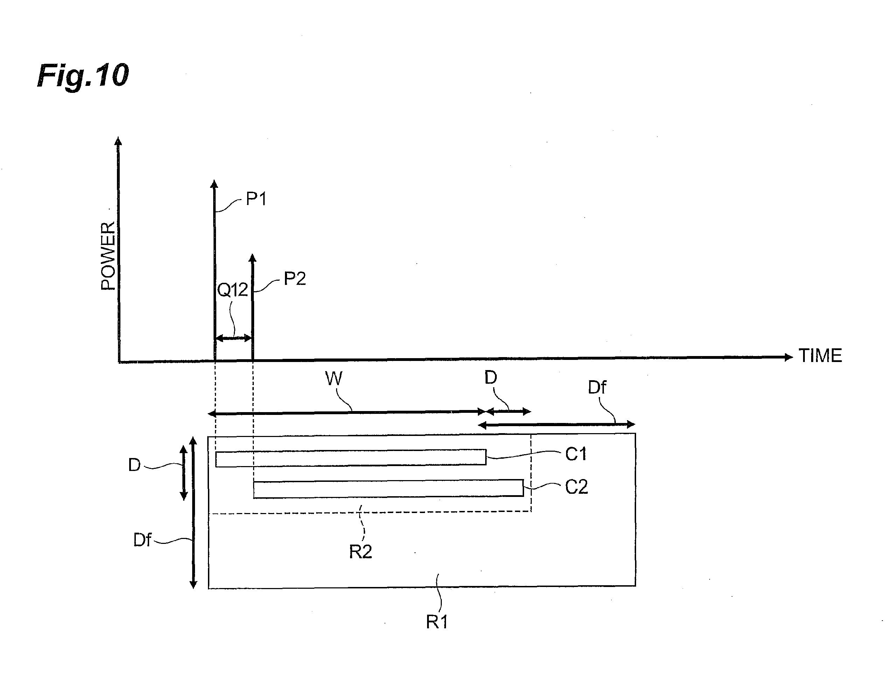

Through performing interference elimination as mentioned above, when the delay amount of a reception path is small, interference can be eliminated without performing feckless calculation by decreasing the maximum delay amount D according to the delay amount. In a specific description of this with reference to Fig. 10, in the mobile communication terminal in this embodiment, when the delay amount Q12 between the reference path P1 and the reception path P2 is small, the maximum delay amount D can be set according to the delay amount Q12. In this case, as illustrated in Fig. 10, for a conventional fixed maximum delay amount Df, the range where the channel matrix is generated is the range indicated by R1; however, for the maximum delay amount D in this embodiment set according to the delay amount Q12, the range where the channel matrix is generated is reduced to the range indicated by R2. Since this enables the numbers of rows and columns of the channel matrix to be smaller, the number of calculation times can be decreased.

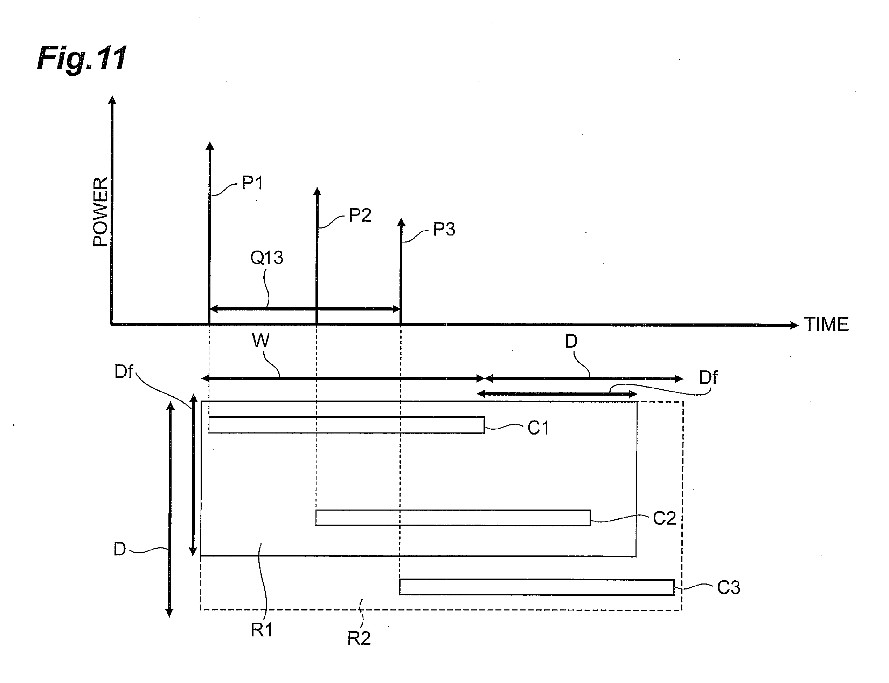

Moreover, when the delay amount of the reception path is large, by increasing the maximum delay amount D according to the delay amount, properties due to interference elimination can be improved. In a specific description of this with reference to Fig. 11, in the mobile communication terminal in this embodiment, when the delay amount Q13 between the reference path P1 and the reception path P3 is large, the maximum delay amount D can be set according to the delay amount Q13. In this case, as illustrated in Fig. 11, for the conventional fixed maximum delay amount Df, the range where the channel matrix is generated is limited to the range indicated by R1; however, for the maximum delay amount D in this embodiment set according to the delay amount Q13, the range where the channel matrix is generated is enlarged to the range indicated by R2. Since this enables the interference due to the reception path P3 that could not be eliminated by a conventional technology also to be eliminated, the effect by eliminating interference is increased.

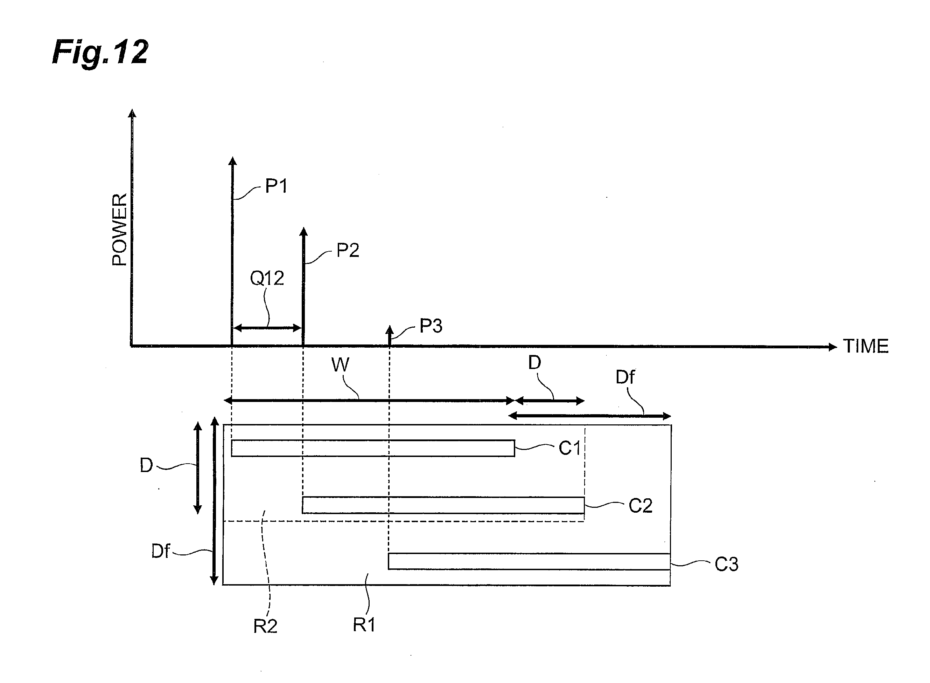

Furthermore, when a reception path having a small received electric power is contained, by setting the maximum delay amount D according to the delay amounts of the reception paths excluding the reception path having a small received electric power, the number of calculation times can be reduced. Accordingly, the effect by interference elimination is increased. As specifically described with reference to Fig. 12, in the mobile communication terminal in this embodiment, when the received electric power of the reception path P3 is smaller by a predetermined threshold value or more in comparison with the received electric power of the reference path P1, the maximum delay amount D can be set according to the delay amount Q12 of the reception path P2 of which received power compared with the received electric power of the reference path P1 is more than a predetermined threshold value. In this case, as illustrated in Fig. 12, for the conventional fixed maximum delay amount Df, the range where the channel matrix is generated is the range indicated by R1; however, for the maximum delay amount D in this embodiment set according to the delay amount Q12, the range where the channel matrix is generated is reduced to the range indicated by R2. Since this enables the numbers of rows and columns of the channel matrix to be decreased, the number of calculation times will decrease.

Finally, the method for eliminating multipath interference according to the present invention is a method for eliminating multipath interference in a mobile communication terminal, in which the maximum delay width is set according to the delay amount or the path electric power of a reception path; a channel matrix is generated based on the predetermined number of samples and the set maximum delay width; and interference is eliminated based on the generated channel matrix. Here, in the mobile communication terminal and the method for eliminating multipath interference in this embodiment, as illustrated in Fig. 7, a channel matrix most suitable for eliminating interference can be generated by performing a control for "setting maximum delay amount D with the delay amount and the received electric power of a path, which are obtained from a delay profile". Next, with reference to the flow chart illustrated in Fig. 9, the procedure of the method for eliminating interference will be described. First, the mobile communication terminal generates a delay profile from a common pilot channel transmitted from a base station, and measures the received electric power and the delay amount (the same meaning as reception timing) of the reception path (refer to Fig. 1). In addition, these measurements can be easily performed as long as a usual CDMA-compliant mobile communication terminal is used. Next, based on the delay profile, the delay amount of the reception path P4 farthest from the reference point of matrix generation (a reception path having maximum received electric power or a reception path having fastest arrival time) is set as the maximum delay amount D (refer to Fig. 8(a)). In Fig. 8, the reception path P1 having maximum received electric power is set as the reference point of generation. However, as illustrated in Fig. 8(b), when the received electric power of the farthest reception path P4 is not larger than a threshold value (for example; 10 dB) with comparing the received electric power of the reception path (main path (reference path)) P1 having largest electric power, the reception path P4 is not selected as the interference elimination path, and the delay amount of the next farthest reception path P3 is set as the maximum delay amount D. Next, a weighting matrix is generated based on the generated channel matrix, and interference is eliminated by multiplying a channel actually carrying data information by the weighting matrix (refer to Fig. 7). By performing such a control, when the delay amount of the reception path is small, interference can be eliminated without performing feckless calculation by decreasing the maximum delay amount D (refer to Fig. 10), and when the delay amount of the reception path is large, property improvement due to interference elimination can be expected by increasing the maximum delay amount D (refer to Fig. 11). Further, the number of calculation times is decreased by excluding paths having small received electric power, thus enabling the effect of the interference elimination to increase (refer to Fig. 12).

## Claims

1. A mobile communication terminal comprising:
a setting means for setting a maximum delay amount according to the delay amount of a reception path farthest from a reception path to be a reference;
a generating means for generating a channel matrix based on a predetermined number of samples and the set maximum delay amount; and
an interference eliminating means for eliminating interference based on the generated channel matrix.

2. The mobile communication terminal according to claim 1, wherein the farthest reception path has the largest delay amount among paths of which an electric power value is compared with an electric power of the reception path to be the reference and is larger than a predetermined threshold value.

3. A method for eliminating multipath interference in a mobile communication terminal, wherein
a maximum delay amount is set according to the delay amount of a reception path farthest from a reception path to be a reference;
a channel matrix is generated based on a predetermined number of samples and the set maximum delay amount; and
interference is eliminated based on the generated channel matrix.
